(19) Europäisches Patentamt
European Patent Office
Office européen des brevets

(11) **EP 4 756 707 A1**

(12) **EUROPEAN PATENT APPLICATION**

(43) Date of publication:
**10.06.2026   Bulletin 2026/24**

(21) Application number: **24217950.5**

(22) Date of filing: **06.12.2024**

(51) International Patent Classification (IPC):
*G06T 5/70* (2024.01)

(52) Cooperative Patent Classification (CPC):
**G06T 5/70;** G06T 2207/10081; G06T 2207/10116;
G06T 2207/20012; G06T 2207/30004

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Koninklijke Philips N.V.
5656 AE Eindhoven (NL)**

(72) Inventors:
• **BRENDEL, Bernhard Johannes
Eindhoven (NL)**
• **SCHNELLBÄCHER, Nikolas David
Eindhoven (NL)**

(74) Representative: **Philips Intellectual Property &
Standards
High Tech Campus 52
5656 AG Eindhoven (NL)**

(54) **IMAGE DENOISING**

(57)     Proposed concepts aim to provide methods and systems pertaining to determining a noise scaling value. In particular, embodiments aim to provide a method for determining a noise scaling value for a determined noise residuum based on a comparison of the values of pixels of a modified image with one or more weighted sums of one or more values of neighboring pixels of the modified image.

FIG. 1

**Description**

FIELD OF THE INVENTION

This invention relates to the field of image processing, and more specifically, to the field of image denoising.

BACKGROUND OF THE INVENTION

Image denoising involves the post-acquisition removal of noise from captured images. State-of-the-art image denoising techniques utilize CNN-based models, which have been trained on real image data in a supervised manner, to generate de-noised images. Often, these models can be formulated as noise prediction algorithms which predict the noise present in an input image and generate a denoised output image by subtracting the predicted noise (or noise residuum) from the noisy input image.

However, these models typically result in an underestimate of the level of noise in the image and therefore do not result in an output image that has been thoroughly denoised. This is a result of the fact that ground truth images that are noise free are very difficult to obtain and therefore the effectiveness of the trained model is limited by the quality of the training data. One solution to this issue is to scale the noise predicted by such models by a scaling factor $\alpha > 1$ before the predicted noise is subtracted from the noisy input image. However, it is difficult with no *a priori* knowledge to determine what a suitable value of this scaling factor might be.

SUMMARY OF THE INVENTION

The invention is defined by the claims.

According to examples in accordance with an aspect of the invention, there is provided a method for determining a noise scaling value. The method comprises: obtaining a noise residuum (r) for an input image (x); comparing values of: pixels of a modified image; and one or more weighted sums of one or more values of neighboring pixels of the pixels of the modified image based on a distance measure, wherein the modified image comprises the input image minus a scaled version of the noise residuum; and determining a noise scaling value based on the comparison result.

Proposed concepts thus aim to provide schemes, solutions, concepts, designs, methods, and systems pertaining to determining a noise scaling value. In particular, embodiments aim to provide a method for determining a noise scaling value for a noise residuum and an associated input image based on a comparison of the values of pixels of a modified image with one or more weighted sums of values of one or more neighboring pixels of the pixels of the modified image.

Thus, the proposed method results in the derivation of a suitable noise scaling value for scaling a noise residuum which can be used to generate a denoised image from an input image. Typical denoising algorithms underestimate the magnitude of noise present in an image and therefore embodiments of the proposed invention aim to address a core problem in typical denoising algorithms (which lies in the question of how a predicted noise of an input image should be scaled to achieve optimal denoising performance).

Proposed concepts are based on the principle that the presence of noise in an image serves to reduce the smoothness of local regions in the image. In the proposed method, a comparison of the values of pixels of an image with a weighted sum of the values of neighboring pixels acts as a metric for local variations in the pixel values of the image and hence acts as an indicator of local image smoothness. This is quantified in a reliable way using a distance measure that allows for a suitable comparison of the different pixel values. Hence, by forming a modified image (by subtracting a scaled version of the noise residuum from the input image) and comparing the values of pixels of the modified image with one or more weighted sums of one or more values of neighboring pixels of the pixels of the modified image based on a distance measure, the proposed method leverages information about the smoothness of a candidate denoised image (i.e., the modified image) to determine a suitable noise scaling value. This provides an accurate and reliable way of estimating the required noise scaling value for image denoising that doesn't require prior knowledge of the sources of noise present in an input image and their magnitude.

Accurate and thorough image denoising is particularly important for imaging workflows that require denoising as an intermediate processing step to obtain flat image textures. For example, super-resolution imaging, machine learning based deblurring or decomposition into spectral material images used in spectral computed tomography. The proposed method for calculating the noise scaling factor may thus be particularly advantageous for these applications (because it is fast, can be computed on the fly, and is flexible). For instance, the working point for calculating the noise scaling factor can be based on noise statistics of the input image, making the approach robust to the natural variability of real-world datasets.

Ultimately, an improved method for determining a noise scaling value for image denoising may be provided by the proposed concept(s).

In some embodiments, the distance measure may comprise a norm of the difference between a value of a pixel of the modified image and a weighted sum of one or more values of its neighboring pixels. Using a norm may provide an accurate measure of the difference between a pixel value and a weighted sum of the values of its neighboring pixels, and therefore provide an accurate indication of the smoothness of the modified image. The smoothness of the denoised image is a useful metric for the thoroughness of the denoising process and therefore can be used to calculate a suitable noise scaling value for achieving accurate denoising of an input image.

In some embodiments, each of the one or more weighted sums of one or more values of neighboring pixels of the pixels of the modified image may comprise one neighboring pixel value weighted with one, and the norm of the difference may comprise an L2-norm. This embodiment provides a simple but efficient way of quantifying the variation in pixel values in a local neighborhood that can be used to determine an accurate noise scaling value.

In some embodiments, determining the noise scaling value may comprise: selecting, for the comparison step, pixels of the modified image based on whether a difference between a value of a corresponding pixel of the input image and its neighboring pixels meet a predetermined requirement. Certain pixels or regions of pixels of the modified image may be better suited than others for measuring the smoothness of the modified image, for example local neighborhoods of pixels that depict uniform objects or materials. This proposed embodiment allows for such pixels to be identified and therefore may result in the determination of a more effective noise scaling value.

In some embodiments, the predetermined requirement may require the difference to be below a predetermined threshold value $t\_\Delta$. This filters out regions of the input image associated with boundaries or edges, which are not expected to conform to the general smoothness criteria expected in the denoised image. Therefore, this implementation results in an improved determination of the noise scaling value.

In some embodiments, the predetermined threshold value $t\_\Delta$ may be based on a value of standard deviations $\sigma$ in noise in the noise residuum $r$. The standard deviation of noise in the noise residuum provides an easily calculable metric for the expected variation in the pixel values of the input image due to noise and therefore may be used to reliably determine a suitable value for the predetermined threshold value.

In some embodiments obtaining the noise residuum ($r$) for the input image ($x$) may comprise: processing the input image with a noise prediction algorithm to predict the noise residuum ($r$) for the input image ($x$). Thus, the noise residuum may be determined in an automated and standardized way from an input image using a noise prediction algorithm, improving denoising performance.

In some embodiments, the input image may comprise a 2-dimensional medical image. Image denoising may be particularly advantageous in medical settings where there are many sources of noise and detailed images are required for assessment and diagnosis.

In some embodiments, the input image may comprise a slice of a 3-dimensional volume. Therefore, the proposed method is advantageously applicable to both 2-dimensional and 3-dimensional image denoising.

According to another aspect of the proposed invention, there is provided a method for removing noise from an input image, the method comprising: determining a noise scaling value according to any of the methods outlined above; scaling the noise residuum by the determined noise scaling value; and subtracting the scaled noise residuum from the input image to generate a de-noised image.

According to a third aspect of the proposed invention, there is provided a computer program comprising computer program code means adapted, when said computer program is run on a computer, to implement any of the proposed methods outlined above.

Further, there is proposed a noise scaling system for determining a noise scaling value, the noise scaling system comprising: an interface configured to obtain a noise residuum ($r$) for an input image ($x$); and a processing arrangement configured to: compare values of: pixels of a modified image; and one or more weighted sums of one or more values of neighboring pixels of the pixels of the modified image, based on a distance measure, wherein the modified image comprises the input image minus a scaled version of the noise residuum; and to determine a noise scaling value based on the comparison result.

In some embodiments of the proposed noise scaling system, the interface may comprise a noise estimation unit configured to process the input image with a noise prediction algorithm to predict the noise residuum ($r$) for the input image ($x$). Hence, the proposed method for determining a noise scaling factor may be used in conjunction with a noise prediction algorithm to provide a fully integrated denoising technique.

A noise removal system is also provided. The proposed noise removal system comprises: an input interface configured to obtain the input image; the noise scaling system described above, an image processing unit configured to: scale the noise residuum by the determined noise scaling value; and to subtract the scaled noise residuum from the input image to generate a de-noised image. The noise removal system may be integrated into conventional and/or novel imaging devices, for example medical imaging devices such as a CT imaging device.

Thus, there may be proposed concepts for a method of determining a noise scaling value based on a comparison of values of pixels of a modified image and one or more weighted sums of one or more values of neighboring pixels of pixels of a modified image, based on a distance measure.

These and other aspects of the invention will be apparent from and elucidated with reference to the embodiment(s) described hereinafter.

BRIEF DESCRIPTION OF THE DRAWINGS

For a better understanding of the invention, and to show more clearly how it may be carried into effect, reference will now be made, by way of example only, to the accompanying drawings, in which:

Fig. 1 is a simplified flow diagram of a method for determining a noise scaling value according to a proposed embodiment;

Fig. 2 is a graph depicting how a determined noise scaling value varies according to a predetermined threshold value used in a pixel selection process;

Fig. 3 is a simplified flow diagram of a method for removing noise from an input image according to another aspect of the present invention;

Fig. 4 is a depiction of four CT images each associated with a different noise scaling value;

Fig. 5 is a simplified block diagram of an imaging system according to an additional aspect of the present invention; and

Fig. 6 illustrates an example of a computer within which one or more parts of an embodiment may be employed.

DETAILED DESCRIPTION OF THE EMBODIMENTS

The invention will be described with reference to the Figures.

Proposed concepts thus aim to provide schemes, solutions, concepts, designs, methods, and systems pertaining to determining a noise scaling value. This is achieved by comparing values of pixels of a modified image, which comprises an input image minus a scaled version of an obtained noise residuum, to at least one weighted sum of one or more values of neighboring pixels of the modified image.

Hence, embodiments of the proposed invention relate to a method for determining a noise scaling value which can be used to scale a predetermined noise residuum associated with a noisy input image to more accurately represent the level of noise present in the input image. Noise residuals calculated by typical image noise prediction algorithms may underestimate the level of noise in an input image due to limitations on providing noise-free training data for such algorithms. Scaling the determined noise residuum using a noise scaling value is one way to overcome this issue. Therefore, the proposed method ultimately results in an improved image denoising technique.

The presence of noise in an image serves to introduce additional variation in the distribution of pixel values. Therefore, the performance of an image denoising algorithm can be measured using a metric for the smoothness of the de-noised image. In the proposed method the performance of different noise scaling values is measured by comparing the value of pixels of a modified image (generated by denoising the input image according to a given noise scaling value) to at least one weighted sum of one or more values of neighboring pixels of the modified image. This comparison serves as a metric for the local variation in pixel values and hence the smoothness of the image. The comparison is quantified based on a distance measure which may be a simple comparison in the difference in the value of a given pixel and an associated weighted sum of neighboring pixel values or may be a more sophisticated distance measure comprising a suitable norm function.

Thus, it is proposed that a noise scaling value for scaling a noise residuum can be determined by imposing a smoothness criterion on a modified image calculated by subtracting a scaled version of the noise residuum from an associated input image. The comparison of pixels in a modified image with at least one weighted sum of one or more values of neighboring pixels of the pixels of the modified image, based on a distance measure, allows for the smoothness of the modified image to be reliably estimated and the smoothness criterion to be imposed.

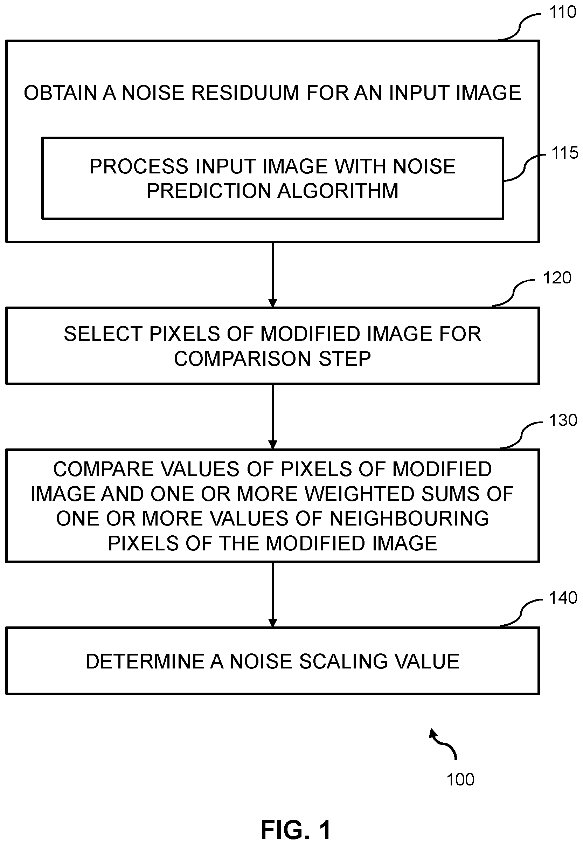

Referring now to Fig. 1 there is depicted a simplified flow diagram of a method 100 for determining a noise scaling value according to a proposed embodiment.

The method commences with a step 110 comprising obtaining a noise residuum ($r$) for an input image ($x$). In this example, the input image is a 2-dimensional medical image. In this exemplary method, step 110 comprises a sub-step 115 comprising processing the input image with a noise prediction algorithm to predict the noise residuum ($r$) for the input image. In the context of the present invention the noise residuum therefore describes a predicted level of noise associated with an input image $x$. This may be expressed in the form of a plurality of noise values, each of the noise values associated with a pixel of the input image $x$ and describing a magnitude of noise contributing to the value of the pixel.

The noise prediction algorithm used in the method 100 comprises a machine-learning algorithm. A machine-learning algorithm is any self-training algorithm that processes input data in order to produce or predict output data. Here, the input data comprises noisy input images which may have been acquired via a variety of different imaging techniques, and output data comprises a noise residuum associated with the input image.

Suitable machine-learning algorithms for being employed in the present invention will be apparent to the skilled person. Examples of suitable machine-learning algorithms include decision tree algorithms and artificial neural networks.

Other machine-learning algorithms such as logistic regression, support vector machines or Naive Bayesian models are suitable alternatives. Purely by way of example, one or more of the machine learning models may employ a Convolutional Neural Network, because CNNs have been proven to be particularly successful at analyzing images, with a much lower error rate than other types of neural network.

The structure of an artificial neural network (or, simply, neural network) is inspired by the human brain. Neural networks are comprised of layers, each layer comprising a plurality of neurons. Each neuron comprises a mathematical operation. In particular, each neuron may comprise a different weighted combination of a single type of transformation (e.g., the same type of transformation, sigmoid etc. but with different weightings). In the process of processing input data, the mathematical operation of each neuron is performed on the input data to produce a numerical output, and the outputs of each layer in the neural network are fed into the next layer sequentially. The final layer provides the output.

There are several types of neural network, such as convolutional neural networks (CNNs) and recurrent neural networks (RNNs). Some embodiments of the present invention may employ CNN-based learning algorithms, because CNNs have proved to be particularly successful at analyzing images, with a much lower error rate than other types of neural network.

CNNs typically contain several layers, including a convolutional layer, a pooling layer, and a fully connected layer. The convolution layer consists of a set of learnable filters and extracts features from the input. The pooling layer is a form of non-linear down-sampling, reducing the data size by combining the outputs of a plurality of neurons in one layer into a single neuron in the next layer. The fully connected layer connects each neuron in one layer to all the neurons in the next layer.

Methods of training a machine-learning algorithm are well known. Typically, such methods comprise obtaining a training dataset, comprising training input data entries and corresponding training output data entries. An initialized machine-learning algorithm is applied to each input data entry to generate predicted output data entries. An error between the predicted output data entries and corresponding training output data entries is used to modify the machine-learning algorithm. This process can be repeated until the error converges, and the predicted output data entries are sufficiently similar (e.g., ±1%) to the training output data entries. This is commonly known as a supervised learning technique.

For example, weightings of the mathematical operation of each neuron may be modified until the error converges. Known methods of modifying a neural network include gradient descent, backpropagation algorithms and so on.

The training input data entries for the noise prediction algorithm used in the method 100 correspond to example input images on which no post-acquisition denoising techniques have been carried out. The training output data entries comprise corresponding noise residua, calculated by subtracting ground truth images from the input images, the ground truth images having been acquired in such a way that they are noise-free (or as close to noise-free as possible). In other words, the noise prediction model may be trained using a deep learning algorithm to receive an array of training inputs and respective known outputs, wherein a training input comprises an input image acquired using a noisy imaging procedure and a respective known output comprises a noise residuum associated with the input image, wherein the known noise residuum has been obtained from the input image using a known ground truth 'noise-free' training image.

Once the noise residuum associated with the input image has been obtained in the step 110, the method proceeds to step 120 comprising selecting pixels of a modified image for a comparison step. The modified image comprises the input image minus a scaled version of the noise residuum. In this exemplary embodiment, step 120 comprises selecting, for the comparison step, pixels of the modified image based on whether a difference between a value of a corresponding pixel of the input image and its neighboring pixels meet a predetermined requirement, wherein the predetermined requirement requires the difference to be below a predetermined threshold value $t\_\Delta$. Thus, pixels of the modified image are selected that correspond to regions of relative uniformity in the input image. This is implemented to remove the effect of boundaries and edges in the modified image that serve to reduce the reliability of the determined noise scaling factor.

In this exemplary embodiment, the predetermined threshold value $t\_\Delta$ is based on a value of standard deviations $\sigma$ in noise in the noise residuum $r$. The standard deviation in noise in the noise residuum is an easily calculable metric for the variation in the pixel values of the image that is due to noise and can therefore inform the selection of a predetermined threshold value.

Once the pixels of the modified image have been selected, the method proceeds to step 130 comprising comparing values of: selected pixels of the modified image; and one or more weighted sums of one or more values of neighboring pixels of the selected pixels of the modified image, based on a distance measure. In this example, the distance measure comprises a norm of the difference between a value of a pixel of the modified image and a weighted sum of one or more values of its neighboring pixels. Further, in this exemplary method each of the one or more weighted sums of one or more values of neighboring pixels of the pixels of the modified image comprises: one neighboring pixels value weighted with one, and the norm of the difference comprises an L2-norm. Once the comparison step 130 has been carried out the method proceeds to a step 140 comprising determining a noise scaling value based on the comparison result.

Thus, in the method 100 an optimization process of the noise scaling factor $\alpha$ is carried out. First, the modified

image $\hat{x}$ is calculated from the input image $x$ and the obtained noise residuum value $r$ based on an estimated noise scaling factor $\alpha$ as

$$\hat{x} = x - \alpha \cdot r. \tag{1}$$

This initially estimated value of the noise scaling factor may be determined based on known information about the imaging technique used to obtain the input image $x$. Alternatively, a plurality of different modified images are generated based on a range of different estimated noise scaling values.

In this example, a smoothness constraint is then implemented on the modified image(s) by requiring that the quadratic sum of differences of selected pixel values of the modified image to neighboring pixel values is minimum. In other words, the value of selected pixels of the modified image is compared to the values of the neighboring pixels of the modified image using an L2-norm, and a noise scaling value determined based on this comparison. Formulated as a simple optimization problem, we require the quadratic neighbor sum

$$\sum_{i,j}\left[(x_i - \alpha r_i) - (x_j - \alpha r_j)\right]^2 = \sum_{i,j}\left[(x_i - x_j) - \alpha\,(r_i - r_j)\right]^2 = F(x, r, \alpha), \tag{2}$$

to be minimal. Here, the sum over $i, j$ denotes the sum over $j$ neighboring pixels of each selected pixel $i$ of the modified image.

This minimization problem can be solved to arrive at the result

$$\alpha_{optimal} = \left(\sum_{i,j}(x_i - x_j)\,(r_i - r_j)\Big/\sum_{i,j}(r_i - r_j)^2\right). \tag{3}$$

Using the result of equation 3, the noise scaling factor can be quickly and easily computed in a standardized manner for any given input image $x$ and associated noise residuum $r$.

The above description relates to just one example of how the value of a pixel of a modified image may be compared to the values of neighboring pixels. In alternative embodiments, this comparison may be implemented differently. For example, the value of a pixel may be compared to a weighted sum of neighboring pixel values in which the neighboring pixels are each weighted according to their position in the modified image or according to known information about the real-life objects they represent. Further, the distance measure used to compare the value of a pixel to a weighted sum of the values of the neighboring pixels need not be the L2-norm but may be any suitable function for comparing the difference between the values. For example, the distance measure may comprise a norm function such as an L1-norm or an L3-norm.

In this example, determining the noise scaling values based on the comparison step involves minimizing the difference between the value of pixels of the modified image and its neighbors. However, in other embodiments, other functions and algorithms may be used to determine the noise scaling value based on the comparison result. For example, in another embodiment the noise scaling value may be selected from a discrete set of predetermined noise scaling values based on the comparison result.

Similarly, other aspects of the method 100 may be implemented differently in alternative embodiments. Although in the method 100, the noise residuum is predicted using a machine learning noise prediction algorithm, this need not be the case in other embodiments of the proposed method. In other examples, the noise residuum may be calculated based on known information about the imaging technique used to acquire the input image and likely sources of noise associated with this.

The concepts of the proposed method are not restricted to 2-dimensional medical imaging. The method for determining a noise scaling factor can be equally well applied in 2-dimensions or in 3-dimensions on a full input volume or any sub-section of the full input volume. In some cases, this may involve determining a noise scaling value for each 2-dimensional image slice of a 3-dimensional image. In some instances, the proposed method may be applied separately to different regions of the image to determine a different noise scaling value for a plurality of different regions of the input image. The proposed method is discussed above in the context of the image domain, however in tomographic imaging, the proposed concepts may be equally well applied in the projection domain. Although of particular use in medical imaging where thorough image denoising is of particular importance, the present method may be applied to any general denoising algorithm for images.

The threshold value $t\_\Delta$ used in step 120 of the method 100 need not be determined based on a value of standard deviations in noise in the noise residuum, but instead may be determined based on known information about the presence of edges and boundaries in the input image or knowledge of the features depicted in the input image. Indeed, the predetermined requirement need not involve a predetermined threshold value at all but could be implemented using more sophisticated functions to identify regions of the modified image associated with edges or boundaries. In some embodiments the selection step 120 is omitted entirely, and the comparison step carried out for each pixel of the modified image. This may simplify the algorithm for determining the noise scaling value in certain instances.

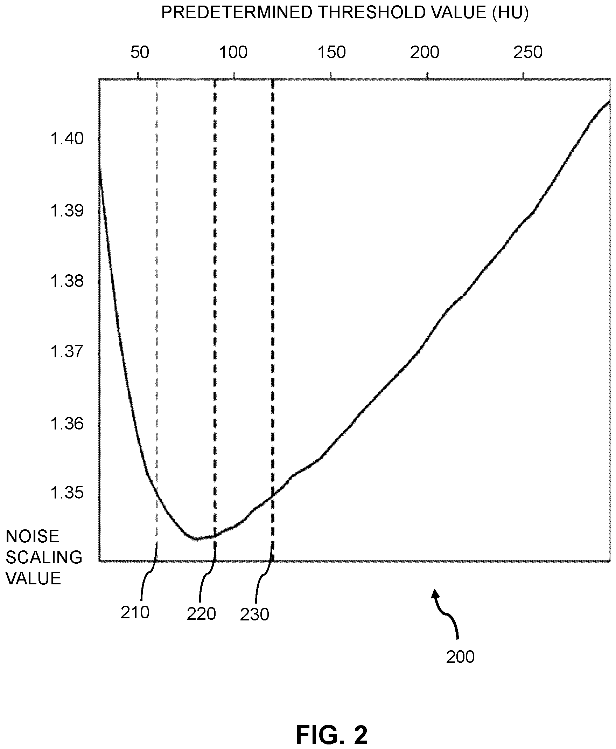

Referring now to Fig. 2, there is depicted a graph 200 showing how the determined noise scaling value for a CT image varies according to a predetermined threshold value used in pixel selection.

When all the pixels of the modified image are used in the determination of the noise scaling value, this calculation can be dominated by edge contributions of object borders in the input image. Therefore, in certain embodiments of the proposed method for determining the noise scaling value, the comparison of pixel values in the modified image is restricted based on a difference between the value of the pixel and the value of the neighboring pixels. This may comprise only using pixels for which the difference in value between the pixel and its neighboring pixel is less than a predetermined threshold value $t\_\Delta$.

The graph 200 shows how the noise scaling value determined using the method 100 varies as the predetermined threshold value $t\_\Delta$ is varied. If the value is set too high, many edge cases are considered and the required magnitude of the noise scaling factor is overestimated as the algorithm attempts to 'smooth out' real variations in the modified image present due to boundaries and edges of real objects depicted in the image. If the predetermined threshold value is set too low, once again the magnitude of the noise residual scaling factor is overestimated as its calculation is based on too small a proportion of the modified image to result in an accurate determination of the required noise scaling value.

In some embodiments, the obtained noise residuum may be used to select a predetermined threshold value such that determination of an effective noise scaling value for denoising an input image can be achieved. The lines 210, 220, and 230 of the graph 200 indicate the values of double, triple and quadruple the standard deviation in the noise residuum on the graph 200. As can be seen a value of three to four times the standard deviation may provide a useful estimate of a suitable value for the predetermined threshold value.

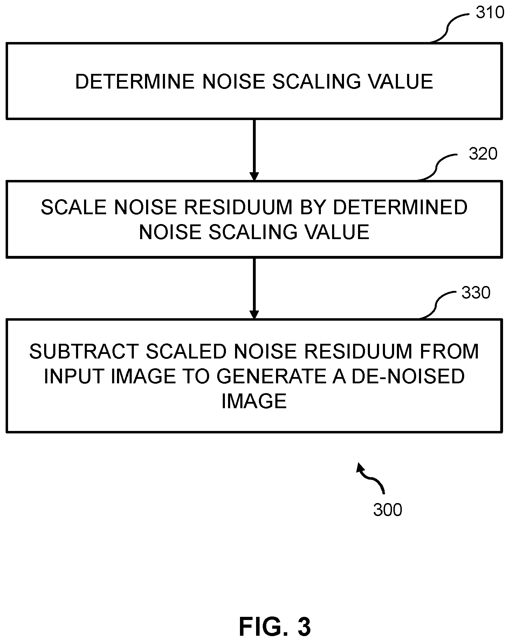

Referring now to Fig. 3 there is depicted a simplified flow diagram of a method 300 for removing noise from an input image according to another aspect of the proposed invention.

The method 300 commences with a step 310 comprising determining a noise scaling value. This is achieved using any of the proposed methods for determining a noise scaling value described above.

Once the noise scaling value has been determined, the method proceeds to a step 320 comprising scaling the noise residuum by the determined noise scaling value. This may comprise a simple multiplication of the values described by the noise residuum by the determined noise scaling value.

The scaled noise residuum value is then subtracted from the input image to generate a de-noised image in a step 330 of the method 300.

Thus, a noise scaling value calculated using a method of the present invention may be used to generate a de-noised image from an input image and an associated noise residuum.

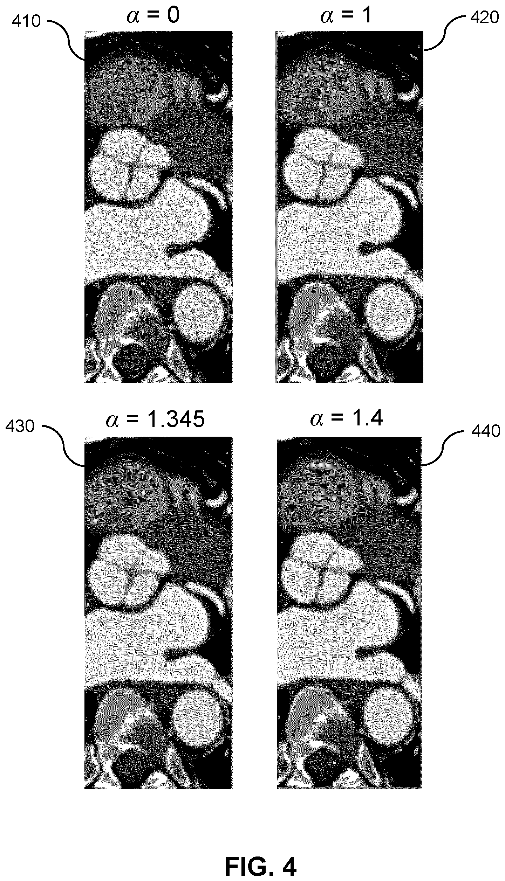

Referring now to Fig. 4, there is provided a depiction of four CT images (410, 420, 430, and 440) each associated with a different noise scaling value.

Each of the images 410, 420, 430, and 440 can be expressed by Equation 1 and is associated with the same input image $x$ and residuum $r$. Each of the images 410, 420, 430, and 440 is generated using a different value for the noise scaling value $\alpha$.

For the first image 410, the noise scaling factor $\alpha = 0$ such that the first image 410 represents the noisy input image $x$ before a denoising process has been carried out. The second image 420 is the result of a noise scaling value of $\alpha = 1$, such that the second image 420 represents a simple subtraction of the noise residuum from the input image. As can be seen in Fig. 2, the second image 420 shows reduced noise compared to the input image illustrated in the first image 410, but still exhibits significant noise in certain regions.

The third and fourth images (430 and 440 respectively) depict denoised images associated with noise scaling values greater than 1. The third image 430 has a scaling value $\alpha = 1.345$, calculated according to an embodiment of the proposed method such that the third image 430 is a denoised image generated using the method 300. The fourth image 440 has a scaling value $\alpha = 1.4$. As can be seen clearly depicted in Fig. 2, the third image 430 gives rise to the smoothest image appearance of the four example images. Using a noise scaling value of higher magnitude than that associated with the third image 430 results in the presence of residual noise and additional image artifacts, which are undesired since they can be easily picked up or amplified by further post-processing steps. However, the fourth image 440 still shows improved noise reduction compared to the second image 420 based on the naive assumption of a unity scaling factor. Therefore, even a slight overestimate of the optimal noise scaling value (introduced for example by omitting the selection step 120 of the method 100) still shows improved denoising performance.

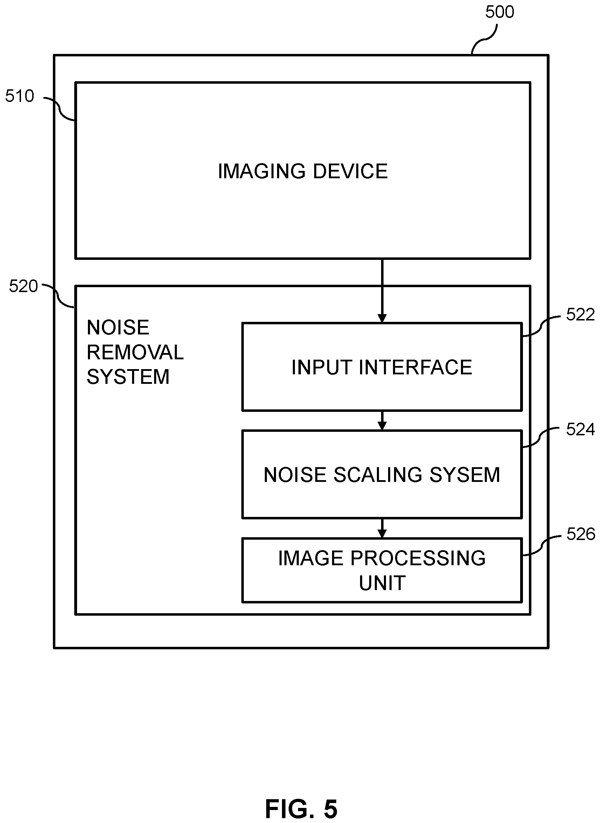

Referring now to Fig. 5, there is depicted a simplified block diagram of an imaging system 500 according to a proposed embodiment.

The imaging system 500 comprises an imaging device 510 and a noise removal system 520. The imaging device 510 may be any suitable imaging device configured to acquire images of a field of view. As just an example, the image device 510 may be a medical imaging device comprising at least one of: a CT imaging device; an x-ray imaging device; an ultrasound imaging device; a magnetic resonance imaging device; and a positron emission tomography imaging device.

The imaging device 510, acquires an input image x which suffers some level of noise due to internal and/or external noise sources. Once acquired, the input image is communicated to the input interface 522 of the noise removal system 520. Once the noise removal system 520 has obtained the input image $x$ via the input interface 522, the noise scaling system 524 is configured to determine a noise scaling value for the input image $x$.

The noise scaling system 524 comprises: an interface configured to obtain a noise residuum $r$ for the input image $x$; and a processing arrangement configured to: compare values of: pixels of a modified image; and one or more weighted sums of one or more values or neighboring pixels of the pixels of the modified image, based on a distance measure, wherein the modified image comprises the input image minus a scaled version of the noise residuum; and to determine a noise scaling value based on the comparison result.

The image processing unit 526 is then configured to scale the noise residuum $r$ by the noise scaling value determined by the noise scaling system 524; and to subtract the scaled noise residuum $r$ from the input image to generate a de-noised image.

Thus, the proposed methods and systems of the present invention may be integrated into existing imaging systems to achieve the acquisition and denoising of images within a single system.

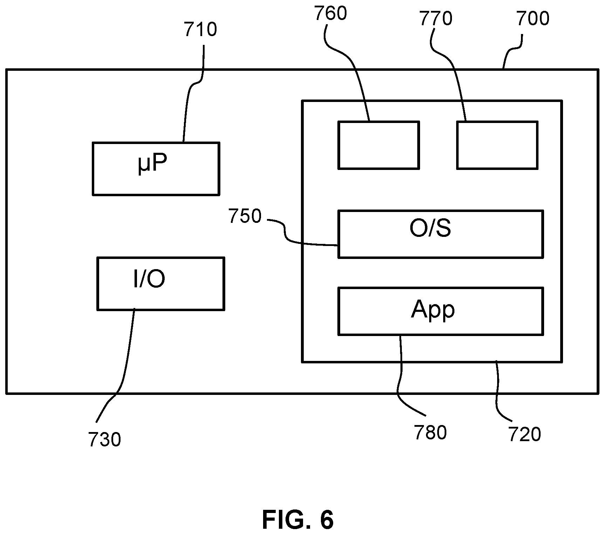

Fig. 6 illustrates an example of a computer 700 within which one or more parts of an embodiment may be employed. Various operations discussed above may utilize the capabilities of the computer 700. In this regard, it is to be understood that system functional blocks can run on a single computer or may be distributed over several computers and locations (e.g., connected via internet).

The computer 700 includes, but is not limited to PCs, workstations, laptops, PDAs, palm devices, servers, storages, and the like. Generally, in terms of hardware architecture, the computer 700 may include one or more processors 710, memory 720 and one or more I/O devices 730 that are communicatively coupled via a local interface (not shown).

The processor 710 is a hardware device for executing software that can be stored in the memory 720. The processor 710 can be virtually any custom made or commercially available processor, such as a central processing unit (CPU), a digital signal processor (DSP), or an auxiliary processor among several processors associated with the computer 700.

The memory 720 can include any one or combination of volatile memory elements and non-volatile memory elements.

The software in the memory 720 may include one or more separate programs, each of which comprises an ordered listing of executable instructions for implemented logical functions. The software in the memory 720 includes a suitable operating system (O/S) 750, compiler 760, source code 770, and one or more applications 780 in accordance with exemplary embodiments.

The operating system 750 controls the execution of other computer programs, and provides scheduling, input-output control, file and data management, memory management, and communication control and related services. It is contemplated by the inventors that the application 780 for implementing exemplary embodiments may be applicable on all commercially available operating systems.

Application 780 may be a source program, executable program (object code), script, or any other entity comprising a set of instructions to be performed.

When the computer 700 is in operation, the processor 710 is configured to execute software stored within the memory 720, to communicate data to and from the memory 720, and to generally control operations of the computer 700 pursuant to the software. The application 780 and the O/S 750 are read, in whole or in part, by the processor 710, perhaps buffered within the processor 710, and then executed.

When the application 780 is implemented in software it should be noted that the application 780 can be stored on virtually any computer readable medium for use by or in connection with any computer related system or method. In the context of this document, the computer readable medium may be an electronic, magnetic, optical, or other physical device or means that can contain or store a computer program for use by or in connection with a computer related system or method.

The application 780 can be embodied in any computer-readable medium for use by or in connection with an instruction execution system, apparatus, or devices, such as a computer-based system, processor-containing system, or other system that can fetch the instructions from the instruction execution system, apparatus, or device and execute the instructions.

The methods of Figs 1 and 3, and the system of Fig. 5 may be implemented in hardware or software, or a mixture of both (for example, as firmware running on a hardware device). To the extent that an embodiment is implemented partly or wholly in software, the functional steps illustrated in the process flowcharts may be performed by suitable programmed physical computing devices, such as one or more central processing units (CPUs) or graphics processing units (GPUs). Each process - and its individual component steps as illustrated in the flowcharts - may be performed by the same or different computing devices. According to embodiments, a computer-readable storage medium stores a computer program comprising computer program code configured to cause one or more physical computing devices to carry out a denoising method as described above when the program is run on the one or more physical computing devices.

To the extent that an embodiment is implemented partly or wholly in hardware, the blocks shown in the block diagrams of Figs 5 and 6 may be separate physical components, or logical subdivisions of single physical components, or may be all implemented in an integrated manner in one physical component. The functions of one block shown in the drawings may be divided between multiple components in an implementation, or the functions of multiple blocks shown in the drawings may be combined in single components in an implementation. Hardware components suitable for use in embodiments of the present invention include, but are not limited to, conventional microprocessors, application specific integrated circuits (ASICs), and field-programmable gate arrays (FPGAs). One or more blocks may be implemented as a combination of dedicated hardware to perform some functions and one or more programmed microprocessors and associated circuitry to perform other functions.

The flowcharts and block diagrams in the Figures illustrate the architecture, functionality, and operation of possible implementations of systems, methods, and computer program products according to various embodiments of the present invention. In this regard, each block in the flowcharts or block diagrams may represent a module, segment, or portion of instructions, which comprises one or more executable instructions for executing the specified logical function(s). In some alternative implementations, the functions noted in the block may occur out of the order noted in the Figures. For example, two blocks shown in succession may, in fact, be executed substantially concurrently, or the blocks may sometimes be executed in reverse order, depending upon the functionality involved. It will also be noted that each block of the block diagrams and/or flowchart illustrations, and combinations of blocks in the block diagrams and/or flowchart illustrations, can be implemented by special purpose hardware-based systems that perform the specified functions or acts or carry out combinations of special purpose hardware and computer instructions.

A single processor or other unit may fulfil the functions of several items recited in the claims. The mere fact that certain measures are recited in mutually different dependent claims does not indicate that a combination of these measures cannot be used to advantage. If a computer program is discussed above, it may be stored/distributed on a suitable medium, such as an optical storage medium or a solid-state medium supplied together with or as part of other hardware, but may also be distributed in other forms such as via the internet or other wired or wireless telecommunication systems, If the term "adapted to" is used in the claims or description, it is noted the term "adapted to" is intended to be equivalent to the term "configured to". Any reference signs in the claims should not be construed as limiting the scope.

It should be understood that the detailed description and specific examples, while indicating exemplary embodiments of the apparatus, systems, and methods, are intended for purposes of illustration only and are not intended to limit the scope of the invention. These and other features, aspects, and advantages of the apparatus, systems, and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

Implementations in accordance with the present disclosure relate to various techniques, methods, schemes and/or solutions pertaining to determining a noise scaling value for an image denoising process. According to proposed concepts, a number of possible solutions may be implemented separately or jointly. That is, although these possible solutions may be described above separately, two or more of these possible solutions may be implemented in one combination or another.

**Claims**

1. A method (100) for determining a noise scaling value the method comprising:

   obtaining (110) a noise residuum (r) for an input image (x);
   comparing (130) values of: pixels of a modified image; and one or more weighted sums of one or more values of neighboring pixels of the pixels of the modified image, based on a distance measure, wherein the modified image comprises the input image minus a scaled version of the noise residuum; and
   determining (140) a noise scaling value based on the comparison result.

2. The method of claim 1, wherein the distance measure comprises a norm of the difference between a value of a pixel of the modified image and a weighted sum of one or more values of its neighboring pixels.

3. The method of claim 2, wherein each of the one or more weighted sums of one or more values of neighboring pixels of the pixels of the modified image comprises: one neighboring pixel value weighted with one, and wherein the norm of the difference comprises an L2-norm.

4. The method of claim 1, wherein determining a noise scaling value comprises: selecting (120), for the comparison step, pixels of the modified image based on whether a difference between a value of a corresponding pixel of the input image and its neighboring-pixels meet a predetermined requirement.

5. The method of claim 4, wherein the predetermined requirement requires the difference to be below a predetermined threshold value $t\_\Delta$.

6. The method of claim 5, wherein the predetermined threshold value $t\_\Delta$ is based on a value of standard deviations $\sigma$ in noise in the noise residuum $r$.

7. The method of any of claims 1 to 6, wherein obtaining the noise residuum ($r$) for the input image ($x$) comprises: processing (115) the input image with a noise prediction algorithm to predict the noise residuum ($r$) for the input image ($x$).

8. The method of any of claims 1 to 7, wherein the input image comprises a 2-dimensional medical image.

9. The method of any of claims 1 to 7, wherein the input image comprises a slice of a 3-dimensional volume.

10. A method (300) for removing noise from an input image, the method comprising:

   determining (310) a noise scaling value according to any of claims 1 to 9;
   scaling (320) the noise residuum ($r$) by the determined noise scaling value; and
   subtracting (330) the scaled noise residuum ($r$) from the input image to generate a de-noised image.

11. A computer program comprising computer program code means adapted, when said computer program is run on a computer, to implement the method of any of claims 1 to 10.

12. A noise scaling system (524) for determining a noise scaling value, the noise scaling system comprising:

   an interface configured to obtain a noise residuum ($r$) for an input image ($x$); and
   a processing arrangement configured: to compare values of: pixels of a modified image; and one or more weighted sums of one or more values of neighboring pixels of the pixels of the modified image, based on a distance measure, wherein the modified image comprises the input image minus a scaled version of the noise residuum; and to determine a noise scaling value based on the comparison result.

13. The system of claim 12, wherein the interface comprises:
   a noise estimation unit configured to process the input image with a noise prediction algorithm to predict the noise residuum ($r$) for the input image ($x$).

14. A noise removal system (520) for removing noise from an input image, the noise removal system comprising:

   an input interface (522) configured to obtain the input image;
   a noise scaling system (524) according to any of claims 12 to 13; and
   an image processing unit (526) configured: to scale the noise residuum ($r$) by the determined noise scaling value; and to subtract the scaled noise residuum ($r$) from the input image to generate a de-noised image.

15. A CT imaging system comprising:

   at least one CT imaging device; and
   the noise removal system of claim 14.

OBTAIN A NOISE RESIDUUM FOR AN INPUT IMAGE — 110

PROCESS INPUT IMAGE WITH NOISE PREDICTION ALGORITHM — 115

SELECT PIXELS OF MODIFIED IMAGE FOR COMPARISON STEP — 120

COMPARE VALUES OF PIXELS OF MODIFIED IMAGE AND ONE OR MORE WEIGHTED SUMS OF ONE OR MORE VALUES OF NEIGHBOURING PIXELS OF THE MODIFIED IMAGE — 130

DETERMINE A NOISE SCALING VALUE — 140

100

**FIG. 1**

**FIG. 2**

```
┌──────────────────────────────────────────┐  ⌐ 310
│                                            │
│      DETERMINE NOISE SCALING VALUE         │
│                                            │
└──────────────────────────────────────────┘
                      │
                      ▼
┌──────────────────────────────────────────┐  ⌐ 320
│                                            │
│     SCALE NOISE RESIDUUM BY DETERMINED     │
│           NOISE SCALING VALUE              │
└──────────────────────────────────────────┘
                      │
                      ▼
┌──────────────────────────────────────────┐  ⌐ 330
│                                            │
│   SUBTRACT SCALED NOISE RESIDUUM FROM      │
│   INPUT IMAGE TO GENERATE A DE-NOISED      │
│                 IMAGE                      │
└──────────────────────────────────────────┘

                              300
```

# FIG. 3

FIG. 4

500

510

IMAGING DEVICE

520

NOISE
REMOVAL
SYSTEM

INPUT INTERFACE — 522

NOISE SCALING SYSEM — 524

IMAGE PROCESSING
UNIT — 526

**FIG. 5**

FIG. 6

Europäisches
Patentamt

European
Patent Office

Office européen
des brevets

**EUROPEAN SEARCH REPORT**

Application Number

EP 24 21 7950

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2024/020792 A1 (TOHME MICHEL S [US] ET AL) 18 January 2024 (2024-01-18) * paragraph [0036] * | 1-15 | INV. G06T5/70 |
| A | EP 4 009 268 A1 (KONINKLIJKE PHILIPS NV [NL]) 8 June 2022 (2022-06-08) * paragraph [0094] - paragraph [0096] * | 1-15 | |
| A | US 2023/306657 A1 (SEHNERT WILLIAM J [US] ET AL) 28 September 2023 (2023-09-28) * paragraph [0061] * | 1-15 | |
| A | JP 2023 546208 A (KONINKLIJKE PHILIPS NV) 1 November 2023 (2023-11-01) * paragraph [0023] * | 1-15 | |
| A | CN 108 259 791 A (UNIV NANJING INFORMATION SCIENCE & TECH) 6 July 2018 (2018-07-06) * the whole document * | 1-15 | |
| A | CN 117 061 772 A (UNIV GUANGDONG TECHNOLOGY) 14 November 2023 (2023-11-14) * the whole document * | 1-15 | TECHNICAL FIELDS SEARCHED (IPC) G06T |
| A | US 2013/202080 A1 (YU LIFENG [US] ET AL) 8 August 2013 (2013-08-08) * paragraph [0013] * | 1-15 | |

-/--

The present search report has been drawn up for all claims

| Place of search | Date of completion of the search | Examiner |
|---|---|---|
| Munich | 13 May 2025 | Fischer, Jan |

EPO FORM 1503 03.82 (P04C01)

page 1 of 2

Europäisches
Patentamt

European
Patent Office

Office européen
des brevets

**EUROPEAN SEARCH REPORT**

Application Number

EP 24 21 7950

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WANG SHANSHAN ET AL: "Magnetic resonance image restoration via dictionary learning under spatially adaptive constraints", ENGINEERING IN MEDICINE AND BIOLOGY SOCIETY (EMBC), 2013 34TH ANNUAL INTERNATIONAL CONFERENCE OF THE IEEE, IEEE, 3 July 2013 (2013-07-03), pages 4030-4033, XP032489209, ISSN: 1557-170X, DOI: 10.1109/EMBC.2013.6610429 [retrieved on 2013-09-25] * abstract * ----- | 1-15 | |
| A | EP 3 633 601 A1 (GEN ELECTRIC [US]) 8 April 2020 (2020-04-08) * paragraph [0077] * ----- | 1-15 | |

TECHNICAL FIELDS
SEARCHED (IPC)

The present search report has been drawn up for all claims

| Place of search | Date of completion of the search | Examiner |
|---|---|---|
| Munich | 13 May 2025 | Fischer, Jan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

............................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 21 7950

This annex lists the patent family members relating to the patent documents cited in the above-mentioned European search report.
The members are as contained in the European Patent Office EDP file on
The European Patent Office is in no way liable for these particulars which are merely given for the purpose of information.

13-05-2025

| Patent document cited in search report | | Publication date | Patent family member(s) | | Publication date |
|---|---|---|---|---|---|
| US 2024020792 | A1 | 18-01-2024 | CN | 117437144 A | 23-01-2024 |
| | | | EP | 4310771 A1 | 24-01-2024 |
| | | | US | 2024020792 A1 | 18-01-2024 |
| EP 4009268 | A1 | 08-06-2022 | CN | 116547698 A | 04-08-2023 |
| | | | EP | 4009268 A1 | 08-06-2022 |
| US 2023306657 | A1 | 28-09-2023 | CN | 116018611 A | 25-04-2023 |
| | | | EP | 4208845 A1 | 12-07-2023 |
| | | | US | 2023306657 A1 | 28-09-2023 |
| | | | WO | 2022051199 A1 | 10-03-2022 |
| JP 2023546208 | A | 01-11-2023 | CN | 116670707 A | 29-08-2023 |
| | | | EP | 4232997 A1 | 30-08-2023 |
| | | | JP | 2023546208 A | 01-11-2023 |
| | | | US | 2023394630 A1 | 07-12-2023 |
| | | | WO | 2022084157 A1 | 28-04-2022 |
| CN 108259791 | A | 06-07-2018 | NONE | | |
| CN 117061772 | A | 14-11-2023 | NONE | | |
| US 2013202080 | A1 | 08-08-2013 | US | 2013202079 A1 | 08-08-2013 |
| | | | US | 2013202080 A1 | 08-08-2013 |
| EP 3633601 | A1 | 08-04-2020 | CN | 110858391 A | 03-03-2020 |
| | | | EP | 3633601 A1 | 08-04-2020 |
| | | | JP | 7053541 B2 | 12-04-2022 |
| | | | JP | 2020064609 A | 23-04-2020 |
| | | | KR | 20200026071 A | 10-03-2020 |
| | | | US | 2020065940 A1 | 27-02-2020 |

EPO FORM P0459

For more details about this annex : see Official Journal of the European Patent Office, No. 12/82